# EUROPEAN PATENT SPECIFICATION

(11) **EP 0 662 204 B1**
(45) Date of publication and mention of the grant of the patent: **01.04.1998**
(21) Application number: 93920996.1
(22) Date of filing: 23.09.1993
(51) Int. Cl.: F16K 17/16

(54) **PIPELINE**
ROHR
PIPELINE

(30) Priority: 28.09.1992 GB 9220407
(43) Date of publication of application: 12.07.1995
(73) Proprietor: COURTAULDS FIBRES (HOLDINGS) LIMITED, London W1A 2BB (GB)
(72) Inventor: PERRY, Michael, Robert 32 Woodland Road, Warwickshire CV8 2FL (GB); WYKES, Katharine, Anne 50 Ettington Close, Warwickshire CV35 9RJ (GB)
(74) Representative: Newby, John Ross
(86) International application number: GB9302000
(87) International publication number: WO9408162

(56) References cited:
- DE-A- 3 630 057
- DE-C- 459 264
- GB-A- 2 185 287
- US-A- 2 552 110

## Description

### Background of the Invention

### 1. Field of the Invention

This invention relates to a pipeline and has particular reference to a pipeline for transporting a congealable solution of cellulose in an aqueous organic solvent.

The term "congealable solution" as used herein means a solution which, as a consequence of changes in temperature, pressure, flow, or degradation can result in the formation of a substantially solid, substantially unmovable product.

The invention has particular application to congealable solutions of cellulose susceptible to exothermic reactions, such as congealable pastes or slurries. The invention has further particular application to a pipeline for the transport of mixtures of cellulose, a tertiary amine n-oxide and a non-solvent for cellulose, such as water.

### 2. Description of the Related Art

It is well known to incorporate into pressure vessels a safety pressure relief device. A common form of safety pressure relief device is a bursting disc. A bursting disc essentially comprises a membrane which is relieved, either by bursting open or being blown out of its holder, or both, under the action of a pressure greater than the normal operating pressure for the pressure vessel but below the pressure at which the vessel itself will rupture.

Bursting discs are conventionally mounted in small pipe spurs located off of a pressure vessel or are formed as part of the wall(s) of the pressure vessel.

It has now been discovered that there may be particular problems with a pipeline used for transporting a congealable solution of cellulose where an excess pressure may arise in the transport pipeline itself. The present invention is concerned with the provision of an over-pressure relief device for a pipeline for transporting a congealable solution where there is a possibility that an excess pressure may arise within the congealable solution. The excess pressure may arise within the pipeline itself or may be the result of a rise in pressure external to the pipeline.

### Summary of the Invention

According to one aspect of the present invention there is provided a pipeline for the transport of a congealable solution of cellulose in an aqueous organic solvent wherein the pipeline is provided with at least one over-pressure relief device comprising a disc displaceable under the action of pressure to form a vent for the pipeline, the pipeline being provided with a branch and the disc of the over-pressure relief device being mounted in the branch (as described in US-A-2552110), part at least of the surface of the disc of the over-pressure relief device being subtantially flush with the inside of the wall of the pipeline.

The disc is preferably a bursting disc and may be mounted in a holder inserted into the branch of the pipeline. Because the surface of the disc is in part substantially flush with the inside of the wall of the pipeline it is washed by the solution passing therethrough. The branch may have a flange, and the holder may have a cooperating flange, the two flanges being secured together, preferably by being bolted together. The bursting disc may be of stainless steel and may be welded (e.g. electron beam welded) to the bottom of the holder.

The branch may further extend into a contained receptacle area downstream of the flange into which congealed solution may be expelled in the event of bursting of the bursting disc. Desirably the branch is maintained at a temperature of above 80°C.

The invention has particular utility where the congealable solution is susceptible to exothermic reactions, and particularly in the case of a mixture of cellulose and a tertiary amine n-oxide, optionally with water. The tertiary amine n-oxide may be an n-morpholine n-oxide.

By "washed" as used herein is meant that at least a part of the surface of the disc is kept substantially free of congealed material in the event that conditions inducive of congealing of the solution arise in the pipeline. Essentially the bursting disc is so mounted in the pipeline that there is no significant "dead space" between the disc and the flow of congealable solution within the pipeline, so that congealed material is not able to build up and form a plug which would impede (or at worst prevent) operation of the disc in the event of an over-pressure appearing within the pipeline. If congealing does arise, degradation of the congealed product may occur, and if this degraded material is carried into the main solution stream it can either block up downstream filters or will reduce the quality of a final product made from the solution, and may prevent the relief of pressure through the bursting disc due to the presence of the degraded product.

The invention also extends to a method of transporting a congealable solution of cellulose in an aqueous tertiary amine oxide as featured in claim 9.

### Brief Description of the Drawing

By way of example, an embodiment of the present invention will now be described with reference to the accompanying drawing, of which:
Figure 1 is a schematic view of a pipeline including a branch and flange,
Figure 2 is a partial cross-section of Figure 1 incorporating a bursting disc and not being in accordance with the invention,
Figure 3 is a cross-section similar to Figure 2, but in accordance with the invention, and
Figure 4 is an enlarged view of the portion within the circle IV of Figure 3.

### Description of the Preferred Embodiment

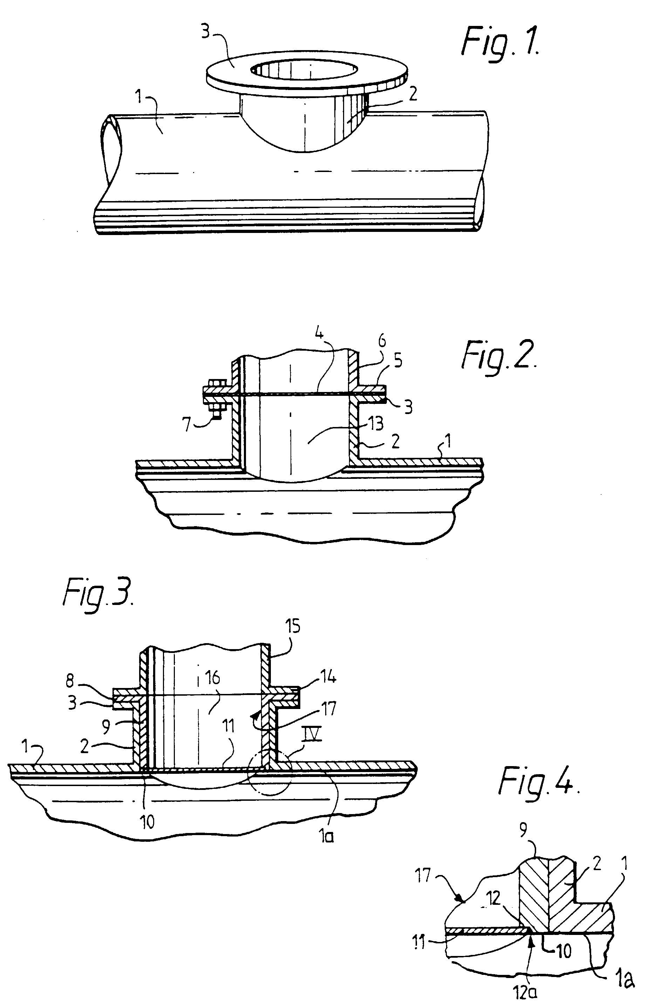

Figure 1 illustrates a pipe 1 through which is transported a congealable solution. In particular the pipe 1 may be used to transport a solution of cellulose in a tertiary amine oxide such as n-methyl morpholine n-oxide. The solution may further include a small quantity of water. The solution may be manufactured by the process described in US-A-4,246,221.

The solution passing through the pipe 1 will congeal in the event that the solution cools sufficiently (it is normally pumped through the pipe at a temperature in the range 100 to 120°C). The solution, being an organic solution, may also decompose to form a hard compound which can adhere to the inside wall surface of the pipe.

In order that there may be a protection against sudden increases in pressure in the pipe, for example, by way of an exothermic reaction within the solution, there is provided one or more over-pressure relief devices in the pipeline.

Over-pressure relief devices are, of course, well known. For example the pipe 1 may be provided with a branch 2 having an integral flange 3 as shown in Figure 1 and an over-pressure relief device could be attached to the flange 3.

Figure 2 shows a conventional over-pressure relief device arrangement in which a bursting disc, in the form of a flat plate 4, is clamped between the flange 3 and the flange 5 on a dump tube 6 by means of bolts 7. It has been discovered, however, that such an arrangement is unreliable for use with congealing or congealable materials particularly those materials subject to very rapid increases in pressure as a result of an exothermic reaction within the materials. It has been found that the arrangement illustrated in Figure 2, although perfectly satisfactory for gases or liquids, may not react satisfactorily when used with congealable solutions. It has been found that with the arrangement illustrated in Figure 2 there can be a failure of the bursting disc to open in the event of an over-pressure within the pipe 1. The solution to this problem is provided by the arrangement illustrated in Figures 3 and 4.

In Figure 3 the pipe 1 is again provided with a branch 2 and a flange 3. The bursting disc is, however, provided on a "top hat"-shaped structure 17 bolted to the flange 3. The structure 17 illustrated in Figures 3 and 4 comprises a flanged portion 8 integral with a tubular member 9 welded to the bottom end 10 of which is a bursting disc 11 of stainless steel. Further details of the bottom of the tubular member 9 and the bursting disc 11 can be seen from Figure 4. It can be seen that the end 10 has a rebated portion 12 into which the bursting disc 11 is fitted prior to electron beam welding from the underside as shown in Figure 4 where the melted-together materials forming the weld are shown by the black triangle 12a. The disc may be flat, or convex or concave as required but must have part of its undersurface "washed" by the solution flowing in the pipe 1.

The bursting disc 11 if flat will, therefore, be effectively continuous with the inside of the wall la of the tube 1 only along a line. However, because the bursting disc 11 is along that line in contact with solution flowing through the pipe 1, the solution continuously washes some part of the surface of the bursting disc 11 and prevents deposits building up on it. With the arrangement illustrated in Figure 2 material can build up in the dead space 13 of the branch 2 and can either congeal or can decompose and form a solid adherent block within the dead space. In the event of an over-pressure appearing within the pipe 1, this block can prevent bursting of the disc 4. By comparison with the arrangement illustrated in Figures 3 and 4, the surface of the disc 11 is always kept clear of deposit at least in part, and, therefore, at least some part of the disc 11 is always exposed to the true pressure of the material within the pipe 1 and is thus ready to burst in the event of the appearance of the protected-against over-pressure within the pipe 1.

The flange 8 of the top hat structure 17 may be clamped between the flange 3 and a further flange 14 attached to a dump tube 15. The dump tube 15 should be above 80°C (e.g. it may be heated to 100°C) and connected to a suitable receptacle (not shown), utilising expansion bellows if required, to contain product released in the event of an over-pressure within the pipe 1 bursting open the disc 11. If required the space 16 within the structure 17 may be filled with nitrogen. A bursting disc detector may be mounted in the space 16.

Surprisingly, it has been discovered that provided the temperature of a congealable solution of cellulose in an aqueous tertiary amine oxide - typically n-methyl morpholine n-oxide - is kept above 80°C, the pressure relief devices can be located at considerable distances apart along the length of a pipeline used to transport the solution

It is believed that this possibility for using widely spaced pressure relief devices arises because the result of an exothermic reaction within the pipeline is to give an impulse to the contents of the pipeline. As the cellulose solution forms a thixotropic dope, the impulse tends to reduce the viscosity of the dope and permit gases from the site of the exothermic reaction or ("exotherm") to pass down the thusly-thinned material. The action of movement within the dope increases the reduction in viscosity thereby setting up a bore within the dope flowing in the pipeline. Unexpectedly it has been discovered, therefore, that it is possible to mount the over-pressure relief devices as far apart as 27 metres and thus as far away from a potential exotherm as 13.5 metres and still obtain safe venting of the product. It may be possible to mount the devices even further apart and thus even further away from a potential exotherm, such as for example 30 metres. Typically it would be preferred to provide an over-pressure relief device close to a potential source of an exotherm but because of the ability of the dope with which this invention is particularly concerned to form cores within itself under exothermic conditions, it is possible to vent safely over much longer distances than might have been expected.

## Claims

1. A pipeline (1) for the transport of a congealable solution of cellulose in an aqueous organic solvent wherein the pipeline is provided with at least one over-pressure relief device (2, 3, 4: 8, 11, 17) comprising a surface (4:11) displaceable under the action of pressure to form a vent for the pipeline, the pipeline being provided with a branch (2) and the surface (4:11) of the over-pressure relief device being mounted in the branch, part at least of the pressure-displaceable surface (11) of the overpressure relief device (8, 11, 17) being substantially flush with the inside of the wall (1a) of the pipeline (1).

2. A pipeline as claimed in claim 1, **characterised in that** the surface defines a bursting disc (11) mounted in a holder (17) inserted into a branch (2) of the pipeline (1) so that the surface of the disc (11) is in part substantially flush with the inside of the wall (1a) of the pipeline (1).

3. A pipeline as claimed in claim 2, **characterised in that** the branch (2) further extends into a contained receptacle area (15) downstream of the holder (17) into which solution may be expelled in the event of bursting of the bursting disc (11).

4. A pipeline as claimed in claim 3, **characterised in that** the extension (15) of the branch is maintained at a temperature in excess of 80°C.

5. A pipeline as claimed in claim 1, **characterised in that** a plurality of said over-pressure relief devices (8, 11, 17) are provided, these being separated by a distance in the range 0.5 to 30 metres.

6. A pipeline as claimed in claim 2, **characterised in that** the branch (2) is provided with a flange (3), the holder (17) has a to-operating flange (8) and the two flanges (3, 8) are clamped together.

7. A pipeline as claimed in claim 2, **characterised in that** the disc (11) is of stainless steel.

8. A pipeline as claimed in claim 7, **characterised in that** the disc (11) is electron beam welded into said holder (17).

9. A method of transporting a congealable solution of cellulose in an aqueous tertiary amine oxide through a pipeline (1), the solution being maintained at a temperature in excess of 80°C, the congealable solution being passed through the pipeline which includes at least one over-pressure relief device (8, 11, 17), the device comprising a disc (11) displaceable under the action of pressure to form a vent for the pipeline, the pressure-displaceable surface of the disc (11) being mounted in the pipeline (2) so that part at least of the surface (11) is kept substantially free of congealed material by the solution passing through the pipeline (1).

10. A method as claimed in claim 9, **characterised in that** said surface (11) is formed as a bursting disc mounted in a holder (17), the holder (17) being inserted into a branch (2) of said pipeline (1) so that at least part of the surface of said disc (11) lies substantially flush with the inside of the wall (1a) of said pipeline (1).

## Patentansprüche

1. Rohr (1) für den Transport einer erstarrbaren Lösung von Zellulose in einem wäßrigen organischen Lösemittel, wobei das Rohr mit mindestens einer Überdruckentlastungsvorrichtung (2, 3, 4: 8, 11, 17) versehen ist, welche eine Oberfläche (4:11) aufweist, die unter der Einwirkung von Druck zur Bildung einer Entlüftung für das Rohr verlagerbar ist, wobei das Rohr mit einer Abzweigung (2) versehen ist und die Oberfläche (4:11) der Überdruckentlastungsvorrichtung in der Abzweigung befestigt ist, wobei zumindest ein Teil der unter Druck verlagerbaren Oberfläche (11) der Überdruckentlastungsvorrichtung (8, 11, 17) im wesentlichen mit der Innenseite der Wand (1a) des Rohres (1) bündig liegt.

2. Rohr nach Anspruch 1, dadurch gekennzeichnet, daß die Oberfläche eine Berstscheibe (11) definiert, die in einer Halterung (17) befestigt ist, welche in eine Abzweigung (2) des Rohrs (1) eingesetzt ist, so daß die Oberfläche der Scheibe (11) im wesentlichen teilweise mit der Innenseite der Wand (1a) des Rohres (1) bündig liegt.

3. Rohr nach Anspruch 2, dadurch gekennzeichnet, daß die Abzweigung (2) weiters sich in einen geschlossenen Behälterbereich (15) stromabwärts der Halterung (17) erstreckt, in den Lösung im Falle eines Bruchs der Berstscheibe (11) ausgestoßen werden kann.

4. Rohr nach Anspruch 3, dadurch gekennzeichnet, daß die Verlängerung (15) der Abzweigung auf einer Temperatur über 80°C gehalten ist.

5. Rohr nach Anspruch 1, dadurch gekennzeichnet, daß eine Mehrzahl von Überdruckentlastungsvorrichtungen (8, 11, 17) vorgesehen ist, wobei diese mit einem Abstand im Bereich von 0,5 bis 30 Metern voneinander getrennt sind.

6. Rohr nach Anspruch 2, dadurch gekennzeichnet, daß die Abzweigung (2) mit einem Flansch (3) versehen ist, die Halterung (17) einen mit diesem zusammenwirkenden Flansch (8) aufweist und die beiden Flansche (3, 8) zusammengespannt sind.

7. Rohr nach Anspruch 2, dadurch gekennzeichnet, daß die Scheibe (11) aus rostfreiem Stahl besteht.

8. Rohr nach Anspruch 7, dadurch gekennzeichnet, daß die Scheibe (11) in die Halterung (17) elektronenstrahlgeschweißt ist.

9. Verfahren zum Transportieren einer erstarrbaren Lösung von Zellulose in einem wäßrigen tertiären Aminoxid durch ein Rohr (1), wobei die Lösung.auf einer Temperatur über 80°C gehalten wird, wobei die erstarrbare Lösung durch das Rohr geleitet wird, das mit mindestens einer Überdruckentlastungsvorrichtung (8, 11, 17) versehen ist, wobei die Vorrichtung eine Scheibe (11) aufweist, die unter der Einwirkung von Druck zur Bildung einer Entlüftung für das Rohr verlagerbar ist, wobei die unter Druck verlagerbare Oberfläche der Scheibe (11) in dem Rohr (2) derart befestigt ist, daß zumindest ein Teil der Oberfläche (11) durch die durch das Rohr (1) hindurchgehende Lösung im wesentlichen frei von erstarrbarem Material gehalten wird.

10. Verfahren nach Anspruch 9, dadurch gekennzeichnet, daß die Oberfläche (11) als Berstscheibe ausgebildet ist, die in einer Halterung (17) befestigt ist, wobei die Halterung (17) in eine Abzweigung (2) des Rohrs (1) eingesetzt ist, so daß zumindest ein Teil der Oberfläche der Scheibe (11) im wesentlichen mit der Innenseite der Wand (1a) des Rohrs (1) bündig liegt.

## Revendications

1. Canalisation (1) pour le transport d'une solution congelable de cellulose dans un solvant organique aqueux, dans laquelle la canalisation est pourvue d'au moins un dispositif de sécurité vis-à-vis d'une surpression (2, 3, 4, 8, 11, 17) comprenant une surface (4, 11) déplaçable sous l'action d'une pression pour former un évent pour la canalisation, la canalisation étant pourvue d'un embranchement (2) et la surface (4: 11) du dispositif de sécurité vis-à-vis d'une surpression étant montée dans l'embranchement, une partie au moins de la surface déplaçable par une pression (11) du dispositif de sécurité vis-à-vis d'une surpression (8, 11, 17) étant sensiblement à fleur de la face interne de la paroi (1a) de la canalisation (1).

2. Canalisation suivant la revendication 1, caractérisée en ce que la surface forme un disque de rupture (11) monté dans un support (17) inséré dans un embranchement (2) de la canalisation (1) de façon que la surface du disque (11) soit en partie sensiblement à fleur de la face interne de la paroi (1a) de la canalisation (1).

3. Canalisation suivant la revendication 2, caractérisée en ce que l'embranchement (2) s'étend en outre à l'intérieur d'une zone de réceptacle confiné (15) située en aval du support (17), dans laquelle de la solution peut être expulsée dans le cas d'une rupture du disque de rupture (11).

4. Canalisation suivant la revendication 3, caractérisée en ce que l'extension (15) de l'embranchement est maintenue à une température supérieure à 80°C.

5. Canalisation suivant la revendication 1, caractérisée en ce qu'un grand nombre de dispositifs de sécurité vis-à-vis d'une surpression (8, 11, 17) sont prévus, ceux-ci étant séparés d'une distance de l'ordre de 0,5 à 30 mètres.

6. Canalisation suivant la revendication 2, caractérisée en ce que l'embranchement (2) est pourvu d'une bride (3), le support (17) présentant une bride coopérante (8) et les deux brides (3, 8) étant pincées ensemble.

7. Canalisation suivant la revendication 2, caractérisée en ce que le disque (11) est en acier inoxydable.

8. Canalisation suivant la revendication 7, caractérisée en ce que le disque (11) est soudé par bombardement électronique dans le support (17).

9. Procédé de transport d'une solution congelable de cellulose dans un oxyde d'amine tertiaire aqueux à travers une canalisation (1), la solution étant maintenue à une température supérieure à 80°C, la solution congelable étant passée à travers la canalisation qui comprend au moins un dispositif de sécurité vis-à-vis d'une surpression (8, 11, 17), le dispositif comprenant un disque (11) déplaçable sous l'action d'une pression pour former un évent pour la canalisation, la surface déplaçable par pression du disque (11) étant montée dans la canalisation (2) de façon qu'une partie au moins de la surface (11) soit maintenue sensiblement exempte de matière congelée par la solution passant à travers la canalisation (1).

10. Procédé suivant la revendication 9, caractérisé en ce que la surface (11) est formée sous la forme d'un disque de rupture monté dans un support (17), le support (17) étant inséré dans un embranchement (2) de la canalisation (1) de façon qu'au moins une partie de la surface du disque (11) se trouve sensiblement à fleur de la face interne de la paroi (1a) de la canalisation (1).
